# EUROPÄISCHE PATENTSCHRIFT

(11) **EP 1 374 460 B1**
(45) Veröffentlichungstag und Bekanntmachung des Hinweises auf die Patenterteilung: **21.11.2007**
(21) Anmeldenummer: 02785040.3
(22) Anmeldetag: 22.01.2002
(51) Int. Cl.: H04J 3/06, H04N 7/24

(54) **SCHALTUNGSANORDNUNG UND VERFAHREN ZUM SYNCHRONISIERTEN ÜBERTRAGEN VON AUDIODATENSTRÖMEN IN EINEM BUSSYSTEM**
CIRCUIT ARRANGEMENT AND METHOD FOR SYNCHRONISED TRANSMISSION OF AUDIO DATA STREAMS IN A BUS SYSTEM
CIRCUIT ET PROCEDE DE TRANSMISSION SYNCHRONISEE DE FLUX DE DONNEES AUDIO DANS UN SYSTEME A BUS

(30) Priorität: 03.02.2001 DE 10104876
(43) Veröffentlichungstag der Anmeldung: 02.01.2004
(73) Patentinhaber: ROBERT BOSCH GMBH, 70442 Stuttgart (DE)
(72) Erfinder: BAIERL, Wolfgang, 73630 Remshalden (DE)
(86) Internationale Anmeldenummer: PCT/DE2002/000184
(87) Internationale Veröffentlichungsnummer: WO 2003/024008

(56) Entgegenhaltungen:
- EP-A- 0 695 063
- EP-A- 0 838 926
- WO-A-95/22233
- WO-A-99/59047
- WO-A-03/003630
- NOAH M ET AL: "DSP FOR A FRAME RELAY VOICE, DATA, FAX MULTIPLEXER" PROCEEDINGS OF THE INTERNATIONAL CONFERENCE ON SIGNAL PROCESSING APPLICATIONS AND TECHNOLOGY, XX, XX, Bd. 1, Oktober 1994 (1994-10), Seiten 249-252, XP000669768

## Beschreibung

### Technisches Gebiet

Die vorliegende Erfindung betrifft eine Schaltungsanordnung sowie ein Verfahren zum synchronisierten Übertragen von Audiodatenströmen in einem Bussystem, insbesondere auf Basis des IEEE1394-Standards.

### Stand der Technik

Das Synchronisieren zwischen sogenannten Datenquellen und sogenannten Datensenken erfolgt bei Datenbussen welche auf asynchroner Datenübertragung basieren konventionellerweise mittels sogenannter "Timestamp"-Venfahren. Für den IEEE1394-Standard wurden in diesem Zusammenhang Verfahren entwickelt, die ebenfalls auf dem "Timestamp"-Prinzip beruhen, wobei der bislang gewählte Ansatz allerdings darauf basiert, daß die Datenquelle der Datensenke vor Beginn des Übertragens der Audiodaten über einen Steuerkanal die Datensample-Rate mitteilt.

In der Folge werden dann Datenpakete mit mehreren Audiodaten-Samples über einen isochronen Datenkanal übertragen, wobei jedes Datenpaket mit einem "Timestamp" versehen ist, der die Darstellungszeit (="presentation time") des ersten Audiodaten-Samples repräsentiert. Die Sample-Datenfrequenz muss hierbei mit einem sogenannten PLL-Schaltkreis (PLL = phase locked loop = phasenstarre bzw. phasenverriegelte Schleife) und mit Informationen über die Anzahl der Daten-Samples pro Datenpaket zurückgewonnen werden.

Aus der EP-A-0 838 926 ist eine Schaltungsanordnung zum synchronisierten Übertragen von Audiodatenströmen in einem Bussystem bekannt. Es ist dort eine Datenquelle vorgesehen zur Bereitstellung von zu übertragenden Audiodatenpaketen mit zugehörigen, ebenfalls zu übertragenden Frequenzdatenpaketen. Zum Aktualisieren eines Synchronisations- oder Zeittaktes ist eine Takt- oder Zeitgebereinheit vorhanden, die mit einer Generatoreinheit zum Auslesen des jeweiligen Zählerstandes der Takt- oder Zeitgebereinheit gemäß der Datenfrequenz in Verbindung steht zum Hinzuaddieren eines vorgegebenen Wertes zum ausgelesenen Zählerstand, zum Eintragen des Wertes in das Frequenzdatenpaket, sowie zum Abgeben des Frequenzdatenpaketes. Die Datenquelle steht über einen Datenkanal mit der Datensenke in Verbindung. Zum Aktualisieren des Zeittaktes oder Synchronisationstaktes ist eine Takt- oder Zeitgebereinheit vorgesehen. Eine Audiodatenpuffereinheit sowie eine Datenfrequenzpuffereinheit sind vorgesehen. Eine Komparatoreinheit steht sowohl mit der Takt- oder Zeitgebereinheit als auch mit der Datenfrequenzpuffereinheit in Verbindung. Eine Ausgabeeinheit steht mit der Audiodatenpuffereinheit wie auch mit der Komparatoreinheit in Verbindung.

Die Veröffentlichung Noah et al: "DSP for a frame relay voice, data, fax multiplexer", Proceedings of the International Conference on Signal Processing Applications and Technology, Band 1, Oct. 1994, Seiten 249-252, zeigt ein Datenprotokoll für Paketdaten mit asynchroner Verarbeitung. Es ist dort eine Datenfluss-Kontrolleinheit vorgesehen, welche Stockungen im Netz reduziert und die Zuverlässigkeit erhöht.

### Darstellung der Erfindung: Aufgabe, Lösung, Vorteile

Ausgehend von den vorstehend dargelegten Nachteilen und Unzulänglichkeiten liegt der vorliegenden Erfindung die Aufgabe zugrunde, eine Schaltungsanordnung sowie ein Verfahren der eingangs genannten Art zur Verfügung zu stellen, mit denen in der Datensenke die Sample-Datenfrequenz der Datenquelle ohne Anordnung einer PLL-Schaltung zurückgewonnen werden kann. Des weiteren zielt die vorliegende Erfindung auf die Möglichkeit ab, über das Bussystem mehrere Audiokanäle parallel und mit unterschiedlichen Datensample-Raten zu übertragen. Schließlich sollen durch die vorliegende Erfindung auch fremdsynchronisierbare Datenquellen und/oder nicht fremdsynchronisierbare Datenquellen in die Schaltungsanordnung sowie in das Verfahren eingebunden werden können.

Diese Aufgabe wird durch eine Schaltungsanordnung mit den im Anspruch 1 angegebenen Merkmalen sowie durch ein Verfahren mit den im Anspruch 14 angegebenen Merkmalen gelöst. Vorteilhafte Ausgestaltungen und zweckmäßige Weiterbildungen der vorliegenden Erfindung sind in den jeweiligen Unteransprüchen gekennzeichnet.

Gemäß der Lehre der vorliegenden Erfindung wird für die Schaltungsanordnung sowie für das Verfahren ein Synchronisationsmechanismus für das Übertragen von Audiodaten in einem Bussystem bereitgestellt. In diesem Zusammenhang wird der Fachmann insbesondere zu schätzen wissen, daß für die Regenerierung der (Sample-)Datenfrequenz in der Datenquelle keine PLL-Schaltung erforderlich ist. Auch haben in vorteilhafter Weise die meisten der im Bussystem vorhandenen Jitter keine Auswirkungen auf den Synchronisationsmechanismus.

Der durch die vorliegende Erfindung geschaffene Synchronisationsmechanismus kann nicht nur für das Übertragen von Audiodaten auf Basis des IEEE1394-Standards, sondern auch für andere Datentypen und/oder für andere Anwendungen, die eine starre Kopplung zwischen Datenquelle und Datensenke erfordern, eingesetzt werden. Gleichwohl kann insbesondere durch den IEEE1394-Standard ein schneller und unkomplizierter Datenaustausch insbesondere im Unterhaltungsbereich zwischen bis zu 63 Geräten bei derzeit maximal 400 MBit/Sekunde (geplant sind bis zu 3.200 MBit/Sekunde) verwirklicht werden.

Grundsätzlich wird bei dieser Art von Datenaustausch zwischen dem asynchronen Datentransfer und dem isochronen Datentransfer unterschieden:

Beim asynchronen Datentransfer werden zuerst Pakete gesendet, die die Adresse der Datenquelle und der Datensenke enthalten. Die Datensenke sendet, wenn sie das Paket empfängt, ein Bestätigungspaket an die Datenquelle zurück, und das Übertragen der eigentlichen Datenpakete kann beginnen.

Beim isochronen Datentransfer wird ein isochroner Kanal zwischen der Datenquelle und der Datensenke in einer bestimmten Bandbreite angefordert. Hierzu wird diesem Kanal eine eindeutige Kanal-Identifikationsnummer (Kanal-ID) zugewiesen; die Datenquelle übermittelt dann nur noch die Kanal-Identifikationsnummer, gefolgt von den Daten, und die Datensenke nimmt nur noch die Daten mit dieser Kanal-Identifikationsnummer an, wobei maximal 64 isochrone Kanäle möglich sind. Der Rest der Bandbreite, die nicht durch den isochronen Transfer belegt ist, steht zur Übertragung asynchroner Datenpakete.

### Kurze Beschreibung der Zeichnungen

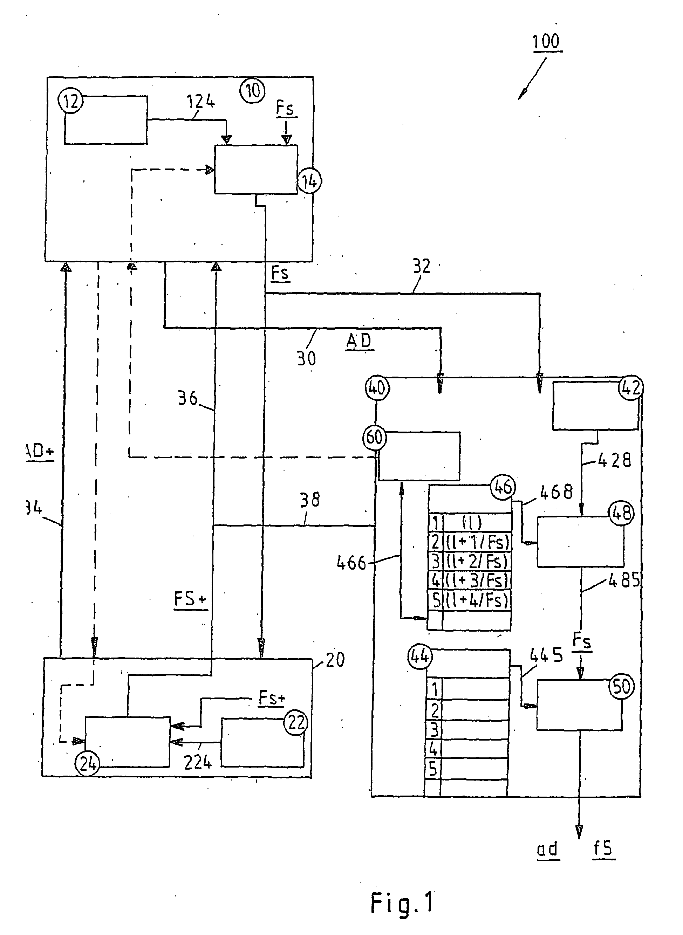

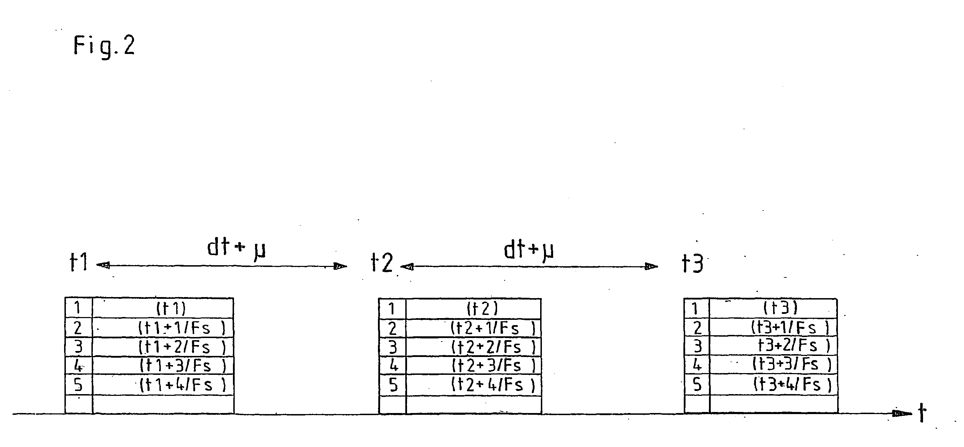

Weitere Ausgestaltungen, Merkmale und Vorteile der vorliegenden Erfindung werden nachstehend anhand des durch die Figuren 1 und 2 veranschaulichten Ausführungsbeispiels näher erläutert.

Es zeigt:
- Fig.: 1 ein Ausführungsbeispiel einer Schaltungsanordnung gemäß der vorliegenden Erfindung, in schematischer Prinzipdarstellung; und
- Fig. 2: eine Möglichkeit des asynchronen Übertragens von drei Frequenzdatenpaketen bei der Schaltungsanordnung gemäß Fig. 1, in schematischer Prinzipdarstellung gegen die Zeit aufgetragen.

Gleiche oder ähnliche Ausgestaltungen, Elemente oder Merkmale sind in den Figuren 1 und 2 mit identischen Bezugszeichen versehen.

### Bester Weg zur Ausführung der Erfindung

Das anhand Figur 1 veranschaulichte Ausführungsbeispiel einer Schaltungsanordnung 100 gemäß der vorliegenden Erfindung weist neben einer nachstehend noch näher zu erläuternden Zusatzdatenquelle 20 eine Datenquelle 10 als Sendeeinheit sowie eine Datensenke 40 als Empfangseinheit auf. Hierbei fungieren sowohl die Datenquelle 10 als auch die Zusatzdatenquelle 20 als auch die Datensenke 40 jeweils als Busknoten in dem Bussystem, in dem die Schaltungsanordnung 100 angeordnet ist.

In der Datenquelle 10, in der Zusatzdatenquelle 20 und in der Datensenke 40 ist jeweils eine Takt- oder Zeitgebereinheit 12 bzw. 22 bzw. 42 vorgesehen, bei der es sich im Falle eines Bussystems auf Basis des IEEE1394-Standards jeweils um einen sogenannten "1394-Timer", das heißt um ein Register handelt, das die für den gesamten Datenbus einheitliche Zeitbasis enthält. Die Takt- oder Zeitgebereinheit 12 bzw. 22 bzw. 42 wird periodisch mit einer Frequenz von etwa acht Kilohertz aktualisiert, das heißt auf den Wert des in der Takt- oder Zeitgebereinheit 12 enthaltenen Timing-Registers zurückgesetzt.

In diesem Zusammenhang ist von Bedeutung, daß dieser Wert auch bei einem Reset des Bussystems nicht zurückgesetzt wird; erst bei einem Überlaufen des Timing-Registers wird der Wert desselben auf. Null zurückgesetzt. Generell bildet das in der Takt- oder Zeitgebereinheit 12 enthaltene Timing-Register die Grundlage für die Synchronisation.

Eine der sowohl für die Schaltungsanordnung 100 als auch für das Verfahren grundlegenden Funktionen ist in der Generatoreinheit 14 der Datenquelle 10 bzw. in der Generatoreinheit 24 der Zusatzdatenquelle 20 implementiert. An einem,der Eingänge der Generatoreinheit 14 bzw. 24 liegt die sogenannte Samplefrequenz oder Datenfrequenz Fs bzw. Fs+ an. Bei jedem Takt der Datenfrequenz Fs bzw. Fs+ liest die Generatoreinheit 14 bzw. 24 den Zählerstand aus dem Timing-Register der Takt- oder Zeitgebereinheit 12 bzw. 22 aus, addiert einen konstanten Wert, nämlich die sogenannte Übertragungsverzögerung (= den sogenannten "Übertragungs-Delay") hinzu und trägt den Wert in ein asynchrones Frequenzdatenpaket FS bzw. FS+ ein.

Dies ist anhand von Figur 2 veranschaulicht, in der drei asynchrone, jeweils um das Zeitintervall dt+µ, zeitlich zueinander versetzte (t3 = t2 + dt+µ. = t1 + dt+µ + dt+µ) Frequenzdatenpakete FS abgebildet sind; anzumerken ist an dieser Stelle ergänzend, daß im sogenannten "Header", das heißt im Kopf des jeweiligen Datenpakets ein Feld einzufügen ist, das Informationen über den Inhalt des Datenpakets sowie über das vorliegend eingesetzte Synchronisationsverfahren beinhaltet.

Nachdem im Ausführungsbeispiel der Figur 2 jeweils fünf Werte in das asynchrone Frequenzdatenpaket FS bzw. FS+ eingetragen sind, wird dieses über einen Datenkanal 32 bzw. 38 zur Datensenke 40 übertragen, und zwar "unicast" oder "broadcast an Gruppe" oder "broadcast an alle". Die Datensenke 40 trägt die empfangenen Werte des übertragenen Frequenzdatenpakets FS in eine Datenfrequenz-Puffereinheit 46 ein.

In einer ebenfalls der Datensenke 40 zugeordneten Komparatoreinheit 48 werden nun die über die Verbindung 428 kommenden Zählerstände der Takt- oder Zeitgebereinheit 42 mit dem über die Verbindung 468 kommenden ersten Wert der Datenfrequenz-Puffereinheit 46 verglichen. Wenn diese Werte identisch sind, wird von der Komparatoreinheit 48 über eine Verbindungsleitung 485 ein Datenfrequenzpuls fs ausgegeben, bei dem es sich im Prinzip wiederum um die in der Datenquelle 10 generierte Samplefrequenz oder Datenfrequenz Fs bzw. um die in der Zusatzdatenquelle 20 generierte Samplefrequenz oder Datenfrequenz Fs+ handelt.

Parallel zur Übertragung der Frequenzdatenpakete FS bzw. FS+ werden über einen asynchronen oder isochronen Datenkanal 30 bzw. 34. Audiodatenpakete AD bzw. AD+ übertragen, die die zugehörigen Audiodaten enthalten. Diese Audio-Samples werden in der Datensenke 40 in eine Audiodaten-Puffereinheit 44 eingetragen. Die der Datensenke 40 ebenfalls zugeordnete Ausgabeeinheit 50, die beispielsweise in Form einer I2S-Ausgabeeinheit ausgebildet ist, liest bei jedem Puls aus der Komparatoreinheit 48 den aktuellen Wert aus der Audiodaten-Puffereinheit 44 über die Verbindung 445 aus und gibt beide Werte in Form des Audiodatenpulses ad sowie des Datenfrequenzpulses fs beispielsweise im I2S-Format aus.

Durch Einsetzen einer ebenfalls der Datensenke 40 zugeordneten Datenfluß-Kontrolleinheit 60 kann ein Leerlaufen oder ein Überlaufen der Audiodaten-Puffereinheit 44 und/oder der Datenfrequenz-Puffereinheit 46 in der Datensenke 40 vermieden werden. Die Datenfluß-Kontrolleinheit 60 weist eine Rückkopplung zur Datenquelle 10 auf (vgl. die gestrichelte. Linie in Figur 1); alternativ oder in Ergänzung hierzu kann die Datenfluß-Kontrolleinheit 60 auch intern, das heißt in der Datensenke 40 eingesetzt werden, um bei Leerlaufen, insbesondere der Audiodaten-Puffereinheit 44, rechtzeitig den Pegel des Audiosignals zu dämpfen und auf diese Weise ein störendes Knacken im Lautsprecher zu vermeiden.

Eine in der schaltungsanordnung 100 ausgezeichnete Verwaltungseinheit in Form eines sogenannten "Audio-Masters" verwaltet eine Liste aller übertragenen, das heißt im Bussystem eingesetzten Samplefrequenzen oder Datenfrequenzen (im Falle des Ausführungsbeispiels gemäß Figur 1 die Samplefrequenzen oder Datenfrequenzen Fs bzw. Fs+). Wird nun eine Zusatzdatenquelle 20 an das Bussystem angeschlossen, so ist zunächst festzustellen, ob diese Zusatzdatenquelle 20 fremdsynchronisierbar ist oder nicht.

Wenn diese Zusatzdatenquelle 20 fremdsynchronisierbar ist, so ist des weiteren festzustellen, ob im Bussystem bereits Datenpakete mit der entsprechenden Samplefrequenz oder Datenfrequenz Fs+ der Zusatzdatenquelle 20 versendet werden. Diese Mechanismen laufen zwischen der Verwaltungseinheit und der Datenquelle 10 bzw. der Zusatzdatenquelle 20 ab.

Wie vorstehend bereits angedeutet, sind in bezug auf die Zusatzdatenquelle 20 hierbei grundsätzlich drei Fälle unterscheidbar:

In einem ersten Fall ist die Zusatzdatenquelle 20 fremdsynchronisierbar und wird die Samplefrequenz oder Datenfrequenz Fs+ bereits übertragen; damit werden alle Datenquellen 10 mit identischer Samplefrequenz oder Datenfrequenz Fs = Fs+ im Bussystem auf denselben Takt synchronisiert. In diesem Falle sendet die Zusatzdatenquelle 20 über den asynchronen oder isochronen Kanal 34 Audiodatenpakete AD+; die Datensenke 40 empfängt über den Kanal 38 asynchrone Frequenzdatenpakete FS = FS+ und generiert mittels der Takt- oder Zeitgebereinheit 42 und mittels der lokalen Komparatoreinheit 48 die Samplefrequenz oder Datenfrequenz Fs = Fs+.

In einem zweiten Fall ist die Zusatzdatenquelle 20 nicht fremdsynchronisierbar und wird die Samplefrequenz oder Datenfrequenz noch nicht übertragen. In diesem Falle generiert die Zusatzdatenquelle 20 mittels der zugeordneten Generatoreinheit 24 die Frequenzdatenpakete mit der Samplefrequenz oder Datenfrequenz; des weiteren generiert die Zusatzdatenquelle 20 Audiodatenpakete mit Audio-Samples.

In einem dritten Fall schließlich ist die Zusatzdatenquelle 20 nicht fremdsynchronisierbar und wird die Samplefrequenz oder Datenfrequenz Fs+ bereits übertragen. In diesem Falle muß die Verwaltungseinheit feststellen, ob alle anderen Datenquellen mit dieser Samplefrequenz oder Datenfrequenz fremdsynchronisierbar sind. Wenn dies gegeben ist, überträgt die Verwaltungseinheit an die Zusatzdatenquelle 20 die Aufgabe, Datenpakete mit der Samplefrequenz oder Datenfrequenz zu generieren, und es tritt der vorstehend geschilderte zweite Fall ein; wenn hingegen nicht alle anderen Datenquellen mit dieser Samplefrequenz oder Datenfrequenz fremdsynchronisierbar sind, wird eine zusätzliche Samplefrequenz oder Datenfrequenz bereitgestellt, und es tritt ebenfalls der vorstehend geschilderte zweite Fall ein.

## Patentansprüche

1. Schaltungsanordnung (100) zum synchronisierten Übertragen von Audiodatenströmen in einem Bussystem **gekennzeichnet durch**
- mindestens eine sowohl asynchron und/oder isochron zu übertragende Audiodatenpakete (AD) als auch den zu übertragenden Audiodatenpaketen (AD) jeweils zugeordnete, eine asynchron zu übertragende Frequenzdatenpakete (FS) bereitstellende Datenquelle (10)
-- mit mindestens einer Takt- oder Zeitgebereinheit (12) zum periodischen Aktualisieren mindestens eines Synchronisations- oder Zeittaktes in der Schaltungsanordnung (100) und
-- mit mindestens einer mit der Takt- oder Zeitgebereinheit (12) in Verbindung (124) stehenden, mit mindestens einer Datenfrequenz (Fs) zu beaufschlagenden Generatoreinheit (14)
--- zum Auslesen des jeweiligen Zählerstandes der Takt- oder Zeitgebereinheit (12) gemäß der Datenfrequenz (Fs),
--- zum Hinzuaddieren eines vorgegebenen der Übertragungsverzögerung entsprechenden Wertes zum ausgelesenen Zählerstand,
--- zum Eintragen des Wertes in das Frequenzdatenpaket (FS) sowie
--- zum Auslesen des Frequenzdatenpaketes (FS) nach Erreichen einer vorgegebenen Anzahl von Werten im Frequenzdatenpaket (FS); und
- mindestens eine mit der Datenquelle (10) über mindestens einen Datenkanal (30, 32) in Verbindung stehende, sowohl die zu übertragenden Audiodatenpakete (AD) als auch die jeweils zugeordneten Frequenzdatenpakete (FS) empfangende Datensenke (40)
-- mit mindestens einer Takt- oder Zeitgebereinheit (42) zum periodischen Aktualisieren des Synchronisations- oder Zeittaktes,
-- mit mindestens einer Audiodaten-Puffereinheit (44) zum Eintragen des Zählerstands der empfangenen Audiodatenpakete (AD);
-- mit mindestens einer Datenfrequenz-Puffereinheit (46) zum Eintragen des Zählerstands der empfangenen Frequenzdatenpakete (FS);
-- mit mindestens einer sowohl mit der Takt- oder Zeitgebereinheit (42) in Verbindung (428) stehenden als auch mit der Datenfrequenz-Puffereinheit (46) in Verbindung (468) stehenden Komparatoreinheit (48)
--- zum Vergleichen des Zählerstands der Takt- oder Zeitgebereinheit (42) mit dem Zählerstand der Datenfrequenz-Puffereinheit (46) sowie
--- zum Abgeben mindestens eines Datenfrequenzpulses (fs); und
--- mit mindestens einer sowohl mit der Audiodaten-Puffereinheit (44) in Verbindung (445) stehenden als auch mit der Komparatoreinheit (48) in Verbindung (485) stehenden Ausgabeeinheit (50) zum Ausgeben des aus der Audiodaten-Puffereinheit (44) ausgelesenen Audiodatenpulses (ad) zusammen mit dem von der Komparatoreinheit (48) abgegebenen, dem Audiodatenpuls (ad) zugeordneten Datenfrequenzpuls (fs).

2. Schaltungsanordnung (100) gemäß Anspruch 1, **dadurch gekennzeichnet, dass** die Schaltungsanordnung (100) für das parallele Übertragen der Audiodatenpakete (AD) und der Frequenzdatenpakete (FS) ausgelegt ist.

3. Schaltungsanordnung (100) gemäß Anspruch 1 oder 2, **dadurch gekennzeichnet, dass** mindestens eine Datenfluss-Kontrolleinheit (60) zum Kontrollieren des Datenflusses zwischen der Datenquelle (10) und der Datensenke (40) vorgesehen ist.

4. Schaltungsanordnung (100) gemäß Anspruch 3, **dadurch gekennzeichnet,**
- **dass** die Dafienfluss-Kontrolleinheit (60) der Datensenke (40) zugeordnet ist,
- **dass** durch die Datenfluss-Kontrolleinheit (60) ein Leerlaufen oder ein Überlaufen der Audiodaten-Puffereinheit (44) oder der Datenfrequenz-Puffereinheit (46) verhinderbar ist.

5. Schaltungsanordnung (100) gemäß Anspruch 3, **dadurch gekennzeichnet,**
- **dass** die Datenfluss-Kontrolleinheit (60) mit der Audiodaten-Puffereinheit (44) oder mit der Datenfrequenz-Puffereinheit (46) ihn Verbindung (466) steht,
- **dass** durch die Datenfluss-Kontrolleinheit (60) ein Leerlaufen oder ein Überlaufen der Audiodaten-Puffereinheit (44) oder der Datenfrequenz-Puffereinheit (46) verhinderbar ist.

6. Schaltungsanordnung (100) gemäß Anspruch 3 oder 4, **dadurch gekennzeichnet, dass** die Datenfluss-Kontrolleinheit (60) zur Datenquelle (10), zur Generatoreinheit (14) der Datenquelle (10), rückgekoppelt ist.

7. Schaltungsanordnung (100) gemäß mindestens einem der Ansprüche 1 bis 6, **dadurch gekennzeichnet, dass** mindestens eine weitere, sowohl asynchron und/oder isochron zu übertragende Audiodatenpakete (AD+) als auch den zu übertragenden Audiodatenpaketen (AD+) jeweils zugeordnete Frequenzdatenpaktes (FS+) bereitstelllende Zusatzdatenquelle (20)
- mit mindestens einer Takt- oder Zeitgebereinheit (22) zum periodischen Aktualisieren des Synchronisations- oder Zeittaktes und
- mit mindestens einer mit der Takt- oder Zeitgebereinheit (22) in Verbindung (224) stehenden, mit mindestens einer Datenfrequenz (Fs+) zu beaufschlagenden Generatoreinheit (24)
-- zum Auslesen des jeweiligen Zählerstands der Takt- oder Zeitgebereinheit (22) gemäß der Datenfrequenz (Fs+),
-- zum Hinzuaddieren eines vorgegebenen, insbesondere konstanten Wertes zum ausgelesenen Zählerstand,
-- zum Eintragen des Wertes in das Frequenzdatenpaket (FS+) sowie
-- zum Abgeben des Frequenzdatenpakets (FS+) nach Erreichen einer vorgegebenen Anzahl von Werten im Frequenzdatenpaket (FS+)
vorgesehen ist.

8. Schaltungsanordnung (100) gemäß Anspruch 7, **dadurch gekennzeichnet, dass** die Zusatzdatenquelle (20)
- sowohl mit der Datenquelle (10) über mindestens einen Datenkanal (34, 36) in Verbindung steht
- als auch mit der Datensenke (40) über mindestens einen Datenkanal (38) in Verbindung steht.

9. Schaltungsanordnung (100) gemäß Anspruch 7 oder 8, **dadurch gekennzeichnet, dass** mindestens eine Zusatzdatenfluss-Kontrolleinheit zum Kontrollieren des Datenflusses zwischen der Zusatzdatenquelle (20) und der Datenquelle (10) vorgesehen ist.

10. Schaltungsanordnung (100) gemäß Anspruch 9, **dadurch gekennzeichnet, dass** die Zusatzdatenfluss-Kontrolleinheit zur Zusatzdatenquelle (20), zur Generatoreinheit (24) der Zusatzdatenquelle (20), rückgekoppelt ist.

11. Schaltungsanordnung (100) gemäß mindestens einem der Ansprüche 1 bis 10, **dadurch gekennzeichnet, dass** mindestens eine Verwaltungseinheit zum Verwalten der Datenfrequenzen (Fs, Fs+) vorgesehen ist.

12. Schaltungsanordnung (100) gemäß mindestens einem der Ansprüche 1 bis 11, **dadurch gekennzeichnet, dass** mindestens eine Externdatenquelle anschließbar ist.

13. Schaltungsanordnung (100) gemäß Anspruch 11 und 12, **dadurch gekennzeichnet, dass** durch Datenaustausch zwischen der Verwaltungseinheit und der Externdatenquelle feststellbar ist, ob die Externdatenquelle fremdsynchronisierbar ist.

14. Verfahre zum synchronisierten Übertragen von Audiodatenströmen in einem Bussystem, **gekennzeichnet durch** die folgenden Schritte:
(a.1) periodisches Aktualisieren mindestens eines Synchronisations- oder Zeittaktes mittels mindestens einer mindestens einer Datenquelle (10) zugeordneten Takt- oder Zeitgebereinheit (12),
(a.2) Beaufschlagen mindestens einer mit der Takt- oder Zeitgebereinheit (12) in Verbindung (124) stehenden, der Datenquelle (10) zugeordneten Generatoreinheit (14) mit mindestens einer Datenfrequenz (Fs);
(b.1) Auslesen des jeweiligen Zählerstands der Takt- oder Zeitgebereinheit (12) gemäß der Datenfrequenz (Fs) mittels der Generatoreinheit (14);
(b.2) Hinzuaddieren eines vorgegebenen, konstanten Wertes zum ausgelesenen Zählerstand;
(b.3) Eintragen des Wertes in ein Frequenzdatenpaket (FS);
(b.4) Abgeben des Frequenzdatenpakets (FS) nach Erreichen einer vorgegebenen Anzahl von Werten im Frequenzdatenpaket (FS);
(c.1) asynchrones und/oder isochrones Übertragen von Audiodatenpaketen (AD) zwischen der Datenquelle (10) und mindestens einer mit der Datenquelle (10) über mindestens einen Datenkanal (30, 32) in Verbindung stehenden Datensenke (40);
(c.2) asynchrones Übertragen der den zu übertragenden Audiodatenpaketen (AD) jeweils zugeordneten Frequenzdatenpaketen (FS);
(d.1) Empfangen sowohl der zu übertragenden Audiodatenpakete (AD) als auch der jeweils zugeordneten Frequenzdatenpakete (FS) mittels der Datensenke (40);
(d.2) periodisches Aktualisieren des Synchronisations- oder Zeittaktes mittels mindestens einer der Datensenke (40) zugeordneten Takt- oder Zeitgebereinheit (42);
(d.3) Eintragen des Zählerstands der empfangenen Audiodatenpakete (AD) in mindestens einer der Datensenke (40) zugeordneten Audiodaten-Puffereinheit (44);
(d.4) Eintragen des Zählerstandes der empfangenen Frequenzdatenpakete (FS) in mindestens einer der Datensenke (40 zugeordneten Datenfrequenz-Puffereinheit (46);
(e.1) Vergleichen des Zählerstands der Takt- oder Zeitgebereinheit (42) mit dem Zählerstand der Datenfrequenz-Puffereinheit (46) mittels mindestens eine sowohl mit der Takt- oder Zeitgebereinheit (42) in Verbindung (428) stehenden als auch mit der Datenfrequenz-Puffereinheit (46) in Verbindung (468) stehenden, der Datensenke (40) zugeordneten Komparatoreinheit (48);
(e.2) Abgeben mindestens eines Datenfrequenzpulses (fs) **durch** die Komparatoreinheit (48); und
(f) Ausgeben des aus der Audiodaten-Puffereinheit (44) ausgelesenen Audiodatenpulses (ad) zusammen mit dem von der Komparatoreinheit (48) abzugebenden dem Audiodatenpuls (ad) zugeordneten Datenfrequenzpuls (fs) durch mindestens eine sowohl mit der Audiodaten-Puffereinheit (44) in Verbindung (445) stehenden als auch mit der Komparatoreinheit (48) in Verbindung (485) stehenden, der Datensenke (40) zugeordneten Ausgabeeinheit (50).

15. Verfahren gemäß Anspruch 14, **dadurch gekennzeichnet, dass** die Audiodatenpakete (AD) und die Frequenzdatenpakete (FS) parallel übertragen werden.

16. Verfahren gemäß Anspruch 14 oder 15, **dadurch gekennzeichnet, dass** der Datenfluss zwischen der Datenquelle (10) und der Datensenke (40) mittels mindestens einer mit der Audiodaten-Puffereinheit (44) und/oder mit der Datenfrequenz-Puffereinheit (46) in Verbindung (466) stehenden, der Datensenke (40) zugeordneten Datenffuss-Kontrolleinheit (60) kontrolliert wird.

17. Verfahren gemäß Anspruch 16, **dadurch gekennzeichnet, dass** durch die Datenfluss-Kontrolleinheit (60) ein Leerlaufen oder ein Überlaufen der Audiodaten-Puffereinheit (44) und/oder der Datenfrequenz-Puffereinheit (46) verhindert wird.

18. Verfahren gemäß Anspruch 16 oder 17, **dadurch gekennzeichnet, dass** die Datenfluss-Kontrolleinheit (60) zur Datenquelle (10), zur Generatoreinheit (14) der Datenquelle (10), rückgekoppelt wird.

19. Verfahren gemäß mindestens einem der Ansprüche 14 bis 18, **gekennzeichnet, durch** die folgenden Schritte:
- periodisches Aktualisieren des Synchronisations- oder Zeittaktes mittels mindestens einer sowohl mit der Datenquelle (10) über mindestens einen Datenkanal (34, 36) in Verbindung stehenden als auch mit der Datensenke (40) über mindestens einen Datenkanal (38) in Verbindung stehenden, mindestens einer Zusatzdatenquelle (20) zugeordneten Takt- oder Zeitgebereinheit (22);
- Beaufschlagen mindestens einer mit der Takt- oder Zeitgebereinheit (22) in Verbindung (224) stehenden, der Zusatzdatenquelle (20) zugeordneten Generatoreinheit (24) mit mindestens einer Datenfrequenz (Fs+);
- Auslesen des jeweiligen Zählerstands der Takt- oder Zeitgebereinheit (22) gemäß der Datenfrequenz (Fs+) mittels der Generatoreinheit (24);
- Hinzuaddieren eines vorgegebenen konstanten Wertes zum ausgelesenen Zählerstand;
- Eintragen des Wertes in ein Frequenzdatenpaket (FS+) und
- Abgeben des Frequenzdatenpakets (FS+) nach Erreichen einer vorgegebenen Anzahl von Werten im Frequenzdatenpaket (FS+).

20. Verfahren gemäß Anspruch 19, **dadurch gekennzeichnet, dass** der Datenfluss zwischen der Zusatzdatenquelle (20) und der Datenquelle (10) mittels mindestens einer Zusatzdatenfluss-Kontrolleinheit kontrolliert wird.

21. Verfahren gemäß Anspruch 20, **dadurch gekennzeichnet, dass** die Zusatzdatenfluss-Kontrolleinheit zur Zusatzdatenquelle (20) zur Generatoreinheit (24) der Zusatzdatenquelle (20), rückgekoppelt wird.

22. Verfahren gemäß mindestens einem der Ansprüche 14 bis 21, **dadurch gekennzeichnet, dass** die Datenfrequenzen (Fs, Fs+) mittels mindestens einer Verwaltungseinheit verwaltet werden.

23. Verfahren gemäß mindestens einem der Ansprüche 14 bis 22, **dadurch gekennzeichnet, dass** mindestens eine Externdatenquelle angeschlossen wird.

24. Verfahren gemäß Anspruch 22 und 23, **dadurch gekennzeichnet, dass** durch Datenaustausch zwischen der Verwaltungseinheit und der Externdatenquelle festgelegt wird, ob die Externdatenquelle fremdsynchronisiert wird.

## Claims

1. Circuit arrangement (100) for the synchronized transfer of audio data streams in a bus system, **characterized by**
- at least one data source (10) providing both audio data packets (AD) to be transferred asynchronously and/or isochronously and frequency data packets (FS) which are respectively associated with the audio data packets (AD) to be transferred and which are to be transferred asynchronously,
-- having at least one clock or timer unit (12) for periodically updating at least one synchronization or timing pulse in the circuit arrangement (100), and
-- having at least one generator unit (14) which is connected (124) to the clock or timer unit (12) and which can have at least one data frequency (Fs) applied to it,
--- for the purpose of reading the respective count of the clock or timer unit (12) on the basis of the data frequency (Fs),
--- for the purpose of adding a prescribed value corresponding to the transfer delay to the count which has been read,
--- for the purpose of entering the value into the frequency data packet (FS) and
--- for the purpose of reading the frequency data packet (FS) after a prescribed number of values has been reached in the frequency data packet (FS); and
- at least one data sink (40) which is connected to the data source (10) via at least one data channel (30, 32) and which receives both the audio data packets (AD) to be transferred and the respective associated frequency data packets (FS),
-- having at least one clock or timer unit (42) for periodically updating the synchronization or timing pulse,
-- having at least one audio data buffer unit (44) for entering the count of the received audio data packets (AD);
-- having at least one data frequency buffer unit (46) for entering the count of the received frequency data packets (FS);
-- having at least one comparator unit (48) which is both connected (428) to the clock or timer unit (42) and connected (468) to the data frequency buffer unit (46)
--- for the purpose of comparing the count of the clock or timer unit (42) with the count of the data frequency buffer unit (46) and also
--- for the purpose of outputting at least one data frequency pulse (fs); and
-- having at least one output unit (50) which is both connected (445) to the audio data buffer unit (44) and connected (485) to the comparator unit (48) for the purpose of outputting the audio data pulse (ad) which has been read from the audio data buffer unit (44) together with the data frequency pulse (fs) which is output by the comparator unit (48) and associated with the audio data pulse (ad).

2. Circuit arrangement (100) according to Claim 1, **characterized in that** the circuit arrangement (100) is designed for the parallel transfer of the audio data packets (AD) and the frequency data packets (FS).

3. Circuit arrangement (100) according to Claim 1 or 2, **characterized in that** at least one data flow control unit (60) is provided for controlling the flow of data between the data source (10) and the data sink (40).

4. Circuit arrangement (100) according to Claim 3, **characterized**
- **in that** the data flow control unit (60) is associated with the data sink (40),
- **in that** the data flow control unit (60) can prevent the audio data buffer unit (44) or the data frequency buffer unit (46) from emptying or overflowing.

5. Circuit arrangement (100) according to Claim 3, **characterized**
- **in that** the data flow control unit (60) is connected (466) to the audio data buffer unit (44) or to the data frequency buffer unit (46),
- **in that** the data flow control unit (60) can prevent the audio data buffer unit (44) or the data frequency buffer unit (46) from emptying or overflowing.

6. Circuit arrangement (100) according to Claim 3 or 4, **characterized in that** the data flow control unit (60) is fed back to the data source (10), to the generator unit (14) of the data source (10).

7. Circuit arrangement (100) according to at least one of Claims 1 to 6, **characterized in that** at least one further supplementary data source (20) providing both audio data packets (AD+) to be transferred asynchronously and/or isochronously and frequency data packets (FS+) which are respectively associated with the audio data packets (AD+) to be transferred
- having at least one clock or timer unit (22) for periodically updating the synchronization or timing pulse and
- having at least one generator unit (24) which is connected (224) to the clock or timer unit (22) and which can have at least one data frequency (Fs+) applied to it
-- for the purpose of reading the respective count of the clock or timer unit (22) on the basis of the data frequency (Fs+),
-- for the purpose of adding a prescribed, in particular constant, value to the count which has been read,
-- for the purpose of entering the value into the frequency data packet (FS+) and
-- for the purpose of outputting the frequency data packet (FS+) after a prescribed number of values has been reached in the frequency data packet (FS+) is provided.

8. Circuit arrangement (100) according to Claim 7, **characterized in that** the supplementary data source (20)
- is both connected to the data source (10) via at least one data channel (34, 36)
- and connected to the data sink (40) via at least one data channel (38).

9. Circuit arrangement (100) according to Claim 7 or 8, **characterized in that** at least one supplementary data flow control unit is provided for controlling the flow of data between the supplementary data source (20) and the data source (10).

10. Circuit arrangement (100) according to Claim 9, **characterized in that** the supplementary data flow control unit is fed back to the supplementary data source (20), to the generator unit (24) of the supplementary data source (20).

11. Circuit arrangement (100) according to at least one of Claims 1 to 10, **characterized in that** at least one management unit is provided for managing the data frequencies (Fs, Fs+).

12. Circuit arrangement (100) according to at least one of Claims 1 to 11, **characterized in that** at least one external data source can be connected.

13. Circuit arrangement (100) according to Claims 11 and 12, **characterized in that** data interchange between the management unit and the external data source makes it possible to establish whether the external data source is extraneously synchronizable.

14. Method for the synchronized transfer of audio data streams in a bus system, **characterized by** the following steps:
(a.1) at least one synchronization or timing pulse is periodically updated using at least one clock or timer unit (12) associated with at least one data source (10),
(a.2) at least one generator unit (14) which is connected (124) to the clock or timer unit (12) and which is associated with the data source (10) has at least one data frequency (Fs) applied to it;
(b.1) the respective count of the clock or timer unit (12) is read on the basis of the data frequency (Fs) using the generator unit (14);
(b.2) a prescribed, constant value is added to the count which has been read;
(b.3) the value is entered into a frequency data packet (FS);
(b.4) the frequency data packet (FS) is output after a prescribed number of values has been reached in the frequency data packet (FS);
(c.1) audio data packets (AD) are asynchronously and/or isochronously transferred between the data source (10) and at least one data sink (40) which is connected to the data source (10) via at least one data channel (30, 32);
(c.2) the frequency data packets (FS) which are respectively associated with the audio data packets (AD) to be transferred are asynchronously transferred;
(d.1) both the audio data packets (AD) to be transferred and the respectively associated frequency data packets (FS) are received using the data sink (40);
(d.2) the synchronization or timing pulse is periodically updated using at least one clock or timer unit (42) associated with the data sink (40);
(d.3) the count of the received audio data packets (AD) in at least one audio data buffer unit (44) associated with the data sink (40) is entered;
(d.4) the count of the received frequency data packets (FS) in at least one data frequency buffer unit (46) associated with the data sink (40) is entered;
(e.1) the count of the clock or timer unit (42) is compared with the count of the data frequency buffer unit (46) using at least one comparator unit (48) which is both connected (428) to the clock or timer unit (42) and connected (468) to the data frequency buffer unit (46) and which is associated with the data sink (40);
(e.2) at least one data frequency pulse (fs) is output by the comparator unit (48); and
(f) the audio data pulse (ad) which has been read from the audio data buffer unit (44) is output together with the data frequency pulse (fs) which is to be output by the comparator unit (48) and which is associated with the audio data pulse (ad) by at least one output unit (50) which is both connected (445) to the audio data buffer unit (44) and connected (485) to the comparator unit (48) and which is associated with the data sink (40).

15. Method according to Claim 14, **characterized in that** the audio data packets (AD) and the frequency data packets (FS) are transferred in parallel.

16. Method according to Claim 14 or 15, **characterized in that** the flow of data between the data source (10) and the data sink (40) is controlled using at least one data flow control unit (60) which is connected (466) to the audio data buffer unit (44) and/or to the data frequency buffer unit (46) and which is associated with the data sink (40).

17. Method according to Claim 16, **characterized in that** the data flow control unit (60) prevents the audio data buffer unit (44) and/or the data frequency buffer unit (46) from emptying or overflowing.

18. Method according to Claim 16 or 17, **characterized in that** the data flow control unit (60) is fed back to the data source (10), to the generator unit (14) of the data source (10).

19. Method according to at least one of Claims 14 to 18, **characterized by** the following steps:
- the synchronization or timing pulse is periodically updated using at least one clock or timer unit (22) which is both connected to the data source (10) via at least one data channel (34, 36) and connected to the data sink (40) via at least one data channel (38) and which is associated with at least one supplementary data source (20);
- at least one generator unit (24) which is connected (224) to the clock or timer unit (22) and which is associated with the supplementary data source (20) has at least one data frequency (Fs+) applied to it;
- the respective count of the clock or timer unit (22) is read on the basis of the data frequency (Fs+) using the generator unit (24);
- a prescribed, constant value is added to the count which has been read;
- the value is entered into a frequency data packet (FS+), and
- the frequency data packet (FS+) is output after a prescribed number of values has been reached in the frequency data packet (FS+).

20. Method according to Claim 19, **characterized in that** the flow of data between the supplementary data source (20) and the data source (10) is controlled using at least one supplementary data flow control unit.

21. Method according to Claim 20, **characterized in that** the supplementary data flow control unit is fed back to the supplementary data source (20), to the generator unit (24) of the supplementary data source (20).

22. Method according to at least one of Claims 14 to 21, **characterized in that** the data frequencies (Fs, Fs+) are managed using at least one management unit.

23. Method according to at least one of Claims 14 to 22, **characterized in that** at least one external data source is connected.

24. Method according to Claims 22 and 23, **characterized in that** data interchange between the management unit and the external data source stipulates whether the external data source is extraneously synchronized.

## Revendications

1. Circuit (100) pour transmettre de manière synchronisée des flux de données audio dans un système de bus,
**caractérisé par**
- au moins une source de données (10) fournissant à la fois à des paquets de données audio (AD) à transmettre en mode asynchrone et/ou isochrone, et aussi des paquets de données de fréquence (FS) à transmettre en mode asynchrone, associés à des paquets de données audio (AD) à transmettre,
- au moins une unité de cadence ou d'horloge (12) pour actualiser périodiquement au moins une cadence de synchronisation ou de temps dans le circuit (100) et
-- au moins un générateur (14) en liaison (124) avec l'unité de cadence ou d'horloge (12), recevant au moins une donnée de fréquence (FS),
--- pour lire l'état de comptage respectif de l'unité de cadence ou d'horloge (12) selon la donnée de fréquence (FS),
--- pour additionner une valeur prédéfinie correspondant à la capacité de transmission à l'état de comptage lu,
--- pour enregistrer la valeur dans le paquet de données de fréquence (FS) et
--- pour lire le paquet de données de fréquence (FS) après avoir atteint un nombre prédéfini de valeurs dans le paquet de données de fréquence (FS) et
- au moins un puits de données (40) relié à la source de données (10) par au moins un canal de données (30, 32) pour recevoir à la fois les paquets de données audio (AD) à transmettre et aussi les paquets de données de fréquence (FS) respectivement associés,
-- au moins une unité de cadence ou d'horloge (42) pour actualiser périodiquement la cadence de synchronisation ou de temps,
-- au moins une unité tampon de données audio (44) pour enregistrer l'état de comptage du paquet de données audio reçu (AD),
-- au moins une unité tampon de données de fréquence (46) pour enregistrer l'état de comptage des paquets de données de fréquence reçus (FS),
-- au moins une unité de comparaison (48) en liaison à la fois (428) avec l'unité de cadence ou d'horloge (42) et aussi en liaison (468) avec l'unité tampon de données de fréquence (46),
--- pour comparer l'état de comptage de l'unité de cadence ou d'horloge (42) à l'état de comptage de l'unité tampon de fréquence (46) et
--- pour fournir au moins une impulsion de données de fréquence (fs) et
--- au moins unité d'émission (50) en liaison (445) avec l'unité tampon de données audio (44) et aussi en liaison (485) avec l'unité de comparaison (48) pour émettre l'impulsion de données audio (ad) lue dans l'unité tampon de données audio (44) avec l'impulsion de données de fréquence (fs) associée à l'impulsion de données audio (ad) émise par l'unité de comparaison (48).

2. Circuit (100) selon la revendication 1,
**caractérisé en ce que**
le circuit (100) est conçu pour la transmission en parallèle des paquets de données audio (AD) et des paquets de données de fréquence (FS).

3. Circuit (100) selon la revendication 1 ou 2,
**caractérisé par**
au moins une unité de contrôle de flux de données (60) pour contrôler le flux de données entre la source de données (10) et le puits de données (40).

4. Circuit (100) selon la revendication 3,
**caractérisé en ce que**
- l'unité de contrôle de flux de données (60) est associée au puits de données (40),
- l'unité de contrôle de flux de données (60) évite que l'unité tampon de données audio (44) ou l'unité tampon de données de fréquence (46) ne se vide ou ne déborde.

5. Circuit (100) selon la revendication 3,
**caractérisé en ce que**
- l'unité de commande de flux de données (60) est reliée (466) à l'unité tampon de données audio (44) ou à l'unité tampon de données de fréquence (46),
- l'unité de contrôle de flux de données (60) évite que l'unité tampon de données audio (44) ou l'unité tampon de données de fréquence (46) ne se vide ou ne déborde.

6. Circuit (100) selon la revendication 3 ou 4,
**caractérisé en ce que**
l'unité de commande de flux de données (60) est couplée en réaction à la source de données (10) pour le générateur (14) de la source de données (10).

7. Circuit (100) selon au moins l'une des revendications 1 à 6,
**caractérisé par**
au moins une autre source de données supplémentaires (20) fournissant des paquets de données audio (AD+) à transmettre en mode asynchrone et/ou isochrone et aussi des paquets de données de fréquence (FS+) associés aux paquets de données audio (AD+) à transmettre,
ayant au moins une unité de cadence ou d'horloge (22) pour actualiser périodiquement la cadence de synchronisation ou de temps et
- au moins un générateur (22) en liaison (224) avec l'unité d'horloge ou de cadence (22), et appliquant au moins une donnée de fréquence (Fs+),
-- pour lire l'état de comptage respectif de l'unité de cadence ou d'horloge (22) selon la donnée de fréquence (Fs+),
-- pour additionner une valeur prédéfinie, notamment constante, à l'état de comptage lu,
-- pour enregistrer la valeur dans le paquet de données de fréquence (Fs+) et
-- pour émettre le paquet de données de fréquence (Fs+) après avoir atteint un nombre prédéfini de valeurs dans le paquet de données de fréquence (Fs+).

8. Circuit (100) selon la revendication 7,
**caractérisé en ce que**
la source de données supplémentaires (20) est en liaison
- à la fois avec la source de données (10) par au moins un canal de données (34, 36),
- et aussi avec le puits de données (40) par au moins un canal de données (38).

9. Circuit (100) selon la revendication 7 ou 8,
**caractérisé par**
au moins une unité de contrôle de flux de données supplémentaires pour contrôler le flux de données entre la source de données supplémentaires (20) et la source de données (10).

10. Circuit (100) selon la revendication 9,
**caractérisé en ce que**
l'unité de contrôle de flux de données supplémentaires est couplée en retour sur la source de données supplémentaires (20), pour legénérateur (24) de la source de données supplémentaires (20).

11. Circuit (100) selon au moins l'une des revendications 1 à 10,
**caractérisé par**
au moins une unité de gestion pour gérer les données de fréquence (Fs, Fs+).

12. Circuit (100) selon au moins l'une des revendications 1 à 11,
**caractérisé par**
le branchement d'au moins une source de données externes.

13. Circuit (100) selon les revendications 11 et 12,
**caractérisé en ce qu'**
par l'échange de données entre l'unité de gestion et la source de données externes on constate si la source de données externes est synchronisée de façon allogène.

14. Procédé de transmission synchrone de flux de données audio dans un système de bus,
**caractérisé par** les étapes suivantes :
(a.1) actualisation périodique d'au moins une cadence de synchronisation ou de temps à l'aide d'au moins une unité de cadence ou d'horloge (12) associée à au moins une source de données (10),
(a.2) application d'au moins un générateur (14) associé à la source de données à au moins une unité de cadence ou d'horloge (12) par une liaison (124), pour appliquer au moins une donnée de fréquence (Fs),
(b.1) lecture de l'état de comptage respectif de l'unité de cadence ou d'horloge (12) selon la fréquence de donnée (Fs) à l'aide du générateur (14),
(b.2) addition d'une valeur constante prédéfinie à l'état de comptage lu,
(b.3) enregistrement de la valeur dans un paquet de données de fréquence (FS),
(b.4) fourniture du paquet de données de fréquence (FS) après avoir atteint un nombre prédéfini de valeurs dans le paquet de données de fréquence (FS),
(c.1) transmission asynchrone et/ou isochrone de paquets de données audio (AD) entre la source de données (10) et au moins un puits de données (40) en liaison avec la source de données (10) par au moins un canal de données (30, 32),
(c.2) transmission asynchrone des paquets de données de fréquence (FS) associés respectivement aux paquets de données audio (AD) à transmettre,
(d.1) réception à la fois des paquets de données audio (AD) à transmettre et aussi des paquets de données de fréquence (FS) associés par l'intermédiaire du puits de données (40),
(d.2) actualisation périodique de la cadence de synchronisation ou de temps par au moins une unité (42) de cadence ou de temps associée au puits de données (40),
(d.3) enregistrement de l'état de comptage des paquets de données audio reçus (AD) dans au moins une unité tampon de données audio (44) associée au puits de données (40),
(d.4) enregistrement de l'état de comptage des paquets de données de fréquence reçus (FS) dans au moins une unité tampon de données de fréquence (46) associée au puits de données (40),
(e.1) comparaison de l'état de comptage de l'unité de cadence ou d'horloge (42) à l'état de comptage de l'unité tampon de données de fréquence (46) à l'aide d'au moins une unité de comparaison (48) en liaison (428) avec l'unité de cadence ou de temps (42) et aussi en liaison (468) avec l'unité tampon de données de fréquence (46), cette unité de comparaison étant associée au puits de données (40),
(e.2) émission d'au moins une impulsion de données de fréquence (fs) par l'unité de comparaison (48) et
(f) émission de l'impulsion de données audio (ad) lue dans l'unité tampon de données audio (44) avec l'impulsion de données de fréquence (fs) associée à l'impulsion de données audio (ad) à émettre par l'unité de comparaison (48), par au moins une unité d'émission (50) associée au puits de données et en liaison (445) à la fois avec l'unité tampon de données audio (44) et aussi en liaison (485) avec l'unité de comparaison (48).

15. Procédé selon la revendication 14,
**caractérisé en ce que**
les paquets de données audio (AD) et les paquets de données de fréquence (FS) sont transmis en parallèle.

16. Procédé selon la revendication 14 ou 15,
**caractérisé en ce que**
le flux de données entre la source de données (10) et le puits de données (40) est contrôlé par au moins une unité de contrôle de flux de données (60) associée à l'unité tampon de données audio (44) et/ou à l'unité tampon de données de fréquence (46) par une liaison (466) associée au puits de données (40).

17. Procédé selon la revendication 16,
**caractérisé en ce que**
l'unité de contrôle de flux de données (60) évite que l'unité tampon de données audio (44) et/ou l'unité tampon de données de fréquence (46) ne se vide ou ne déborde.

18. Procédé selon la revendication 16 ou 17,
**caractérisé en ce que**
l'unité de contrôle de flux de données (60) est couplée en réaction sur le générateur (14) de la source de données (10).

19. Procédé selon au moins l'une des revendications 14 à 18,
**caractérisé par** les étapes suivantes :
- actualisation périodique de la cadence de synchronisation ou de temps à l'aide d'au moins une unité de cadence ou d'horloge (22) associée à au moins une source de données supplémentaires (20), en liaison avec la source de données (10) par au moins un canal de données (34, 36) et aussi au puits de données (40) par au moins un canal de données (38),
- application d'au moins une donnée de fréquence (Fs+) au générateur (24) associé à l'unité de cadence ou d'horloge (22) par une liaison (224), cette unité étant associée à la source de données supplémentaires (20),
- lecture de l'état de comptage respectif de l'unité de cadence ou d'horloge (22) suivant la donnée de fréquence (Fs+) par l'intermédiaire du générateur (24),
- addition d'une valeur constante prédéfinie à l'état de comptage lu,
- enregistrement de la valeur dans un paquet de données de fréquence (FS+) et
- émission du paquets de données de fréquence (FS+) après avoir atteint un nombre prédéfini de valeurs dans le paquet de données de fréquence (FS+).

20. Procédé selon la revendication 19,
**caractérisé en ce qu'**
on contrôle le flux de données entre la source de données supplémentaires (20) et la source de données (10) à l'aide d'au moins une unité de contrôle de flux de données supplémentaires.

21. Procédé selon la revendication 20,
**caractérisé en ce que**
l'unité de contrôle de flux de données supplémentaires est couplée en réaction sur la source de données supplémentaire (20), sur le générateur (24) de la source de données supplémentaires (20).

22. Procédé selon au moins l'une des revendications 14 à 21,
**caractérisé en ce que**
les données de fréquence (Fs, Fs+) sont gérées à l'aide d'au moins une unité de gestion.

23. Procédé selon au moins l'une des revendications 14 à 22,
**caractérisé par**
le branchement d'au moins une source de données externes.

24. Procédé selon les revendications 22 et 23,
**caractérisé en ce que**
par l'échange de données entre l'unité de gestion et la source de données externes on détermine si la source de données externes est synchronisée de manière aLlogène.
